# EUROPÄISCHE PATENTSCHRIFT

(11) **EP 2 609 421 B1**
(45) Veröffentlichungstag und Bekanntmachung des Hinweises auf die Patenterteilung: **23.09.2020**
(21) Anmeldenummer: 11775930.8
(22) Anmeldetag: 12.10.2011
(51) Int. Cl.: G01N 29/22, G01N 29/265, G01N 29/24

(54) **AUTOMATISCHE PRÜFKOPFPOSITIONSABHÄNGIGE EINSCHALLWINKELVERSTELLUNG FÜR ULTRASCHALLPRÜFKÖPFE**
AUTOMATIC INCIDENCE ANGLE ADJUSTMENT FOR ULTRASOUND TEST HEADS WHICH IS DEPENDENT ON THE POSITION OF THE TEST HEADS
RÉGLAGE AUTOMATIQUE DE L'ANGLE D'INCIDENCE D'UNE TÊTE DE CONTRÔLE À ULTRASONS, EN FONCTION DE SA POSITION

(30) Priorität: 28.10.2010 EP 10189177
(43) Veröffentlichungstag der Anmeldung: 03.07.2013
(73) Patentinhaber: Siemens Aktiengesellschaft, 80333 München (DE)
(72) Erfinder: CLOSSEN-VON LANKEN SCHULZ, Michael, 47661 Issum (DE); OBERMAYR, Stefan, 45475 Mülheim (DE)
(86) Internationale Anmeldenummer: PCT/EP2011/067805
(87) Internationale Veröffentlichungsnummer: WO 2012/055701

(56) Entgegenhaltungen:
- EP-A1- 2 096 433
- GB-A- 1 203 854
- GB-A- 2 015 740
- GB-A- 2 195 022
- JP-A- H05 107 236
- US-A- 3 593 570
- US-B1- 6 247 367

## Beschreibung

Die vorliegende Erfindung betrifft eine Vorrichtung zur Ultraschallprüfung eines Bauteils und eine Verwendung einer solchen Vorrichtung. Weiterhin betrifft die Erfindung ein Verfahren zur Ultraschallprüfung eines Bauteils.

Im Rahmen zahlreicher technischer Anwendungen werden Bauteile einer Ultraschallprüfung unterzogen, um die Qualität der Bauteile oder deren Verschleiß oder deren betrieblichen Beanspruchungen zu beurteilen. Beispielsweise werden Dampfturbinenschaufeln im eingebauten Zustand auf Anrisse im nicht zugänglichen Schaufelfuß geprüft.

In dem Dokument GB 2 195 022 A wird ein Ultraschallmessgerät beschrieben, welches zwei Transducer umfasst, die relativ zueinander horizontal linear bewegt werden können. Weiterhin umfassen die Transducer Gelenke, die mit Hilfe von Federn vorgespannt sind und ein korrektes Anlegen der Transducer an die jeweilige Oberfläche ermöglichen.

Das Dokument EP 2 096 433 A1 beschreibt eine Vorrichtung zur zerstörungsfreien Materialprüfung eines Prüfgegenstandes mit Ultraschallwellen, wobei der Prüfkopf schwenkbar an einem Schlitten angebracht ist. Dabei erstreckt sich die Schwenkachse beispielsweise parallel zur Bewegungsrichtung des Schlittens. Das heißt, der Prüfkopf ist entlang einer Schiene bewegbar und senkrecht dazu schwenkbar.

Das Dokument GB 2 015 740 A beschreibt eine Vorrichtung zum Führen von Ultraschallprüfköpfen. Dabei ermöglicht die Vorrichtung eine Bewegung und Einstellung des Prüfkopfes in zwei horizontalen Richtungen und unabhängig davon ein teilweises Schwenken um zwei horizontale Achsen, die parallel zu den jeweiligen horizontalen Translationsrichtungen verlaufen.

Das Dokument US 6,247,367 B1 offenbart eine Ultraschallmessanordnung, bei welcher der Einschallwinkel in Bezug auf einen konkreten Fokuspunkt einer zu untersuchenden Oberfläche variiert werden kann.

Das Dokument GB 1 203 854 A beschreibt eine Vorrichtung zum Untersuchen von Material mit Hilfe von Ultraschall. Dabei können die Einschallwinkel der verwendeten Transducer mit Hilfe einer Einspannvorrichtung fest eingestellt werden.

Das Dokument US 3,593,570 beschreibt ein Ultraschalltestgerät, in welchem der Ultraschallsensor um eine Rotationsachse gedreht werden kann. Das Ultraschalltestgerät kann über eine zu untersuchende Oberfläche geführt werden.

Das Dokument JP H05 107236 A beschreibt eine Ultraschall-Prüfvorrichtung mit einer bogenförmigen Führungsschiene, entlang der ein Ultraschallsensor bewegt werden kann.

Bei der Ultraschallprüfung komplexer Geometrien, zum Beispiel der Schaufelfüße vom Schaufelblatt aus, ist eine gleichbleibende, lotrechte Einschallung auf den Fehlererwartungsbereich bei gleichbleibenden Schallwegen nur schwer realisierbar. Wenn die Oberfläche, auf der der Prüfkopf läuft, vollkommen anders gekrümmt ist als die Prüfoberfläche, ist es mitunter erforderlich, die Prüfkopfposition sowie den Einschall- oder Schielwinkel des Prüfkopfes entlang der Prüfbahn kontinuierlich und unabhängig voneinander zu verändern.

Bislang musste entweder mit hohen Empfindlichkeitseinbußen und stark eingeschränktem Prüfbereich geprüft werden oder es wurden Formstücke gebaut, die alle möglichen Einschallpositionen und Schielwinkel über diskrete Prüfkopfpositionen realisierten. Dies machte jedoch einen Umbau des Prüfkopfes von einer Position zur nächsten notwendig und war daher mit erheblichem Zeitaufwand verbunden. Zudem wurden die Bereiche zwischen den diskreten Positionen nicht mit gleich hoher Empfindlichkeit geprüft. Es ist daher eine erste Aufgabe der vorliegenden Erfindung, eine verbesserte Vorrichtung zur Ultraschallprüfung eines

Bauteils zur Verfügung zu stellen. Eine zweite Aufgabe der vorliegenden Erfindung besteht darin, eine Verwendung der verbesserten Vorrichtung zur Ultraschallprüfung zur Verfügung zu stellen. Eine dritte Aufgabe der vorliegenden Erfindung besteht darin, ein vorteilhaftes Verfahren zur Ultraschallprüfung einer Oberfläche eines Bauteils zur Verfügung zu stellen.

Die erste Aufgabe wird durch eine Vorrichtung zur Ultraschallprüfung eines Bauteils nach Anspruch 1 gelöst. Die zweite Aufgabe wird durch eine Verwendung nach Anspruch 3 gelöst. Die dritte Aufgabe wird durch ein Verfahren zur Ultraschallprüfung nach Anspruch 6 gelöst. Die abhängigen Ansprüche enthalten weitere vorteilhafte Ausgestaltungen der Erfindung.

Die erfindungsgemäße Vorrichtung zur Ultraschallprüfung eines Bauteils umfasst mindestens einen Ultraschallprüfkopf und eine Führungseinheit. Das Bauteil umfasst eine Oberfläche. Die Führungseinheit ist so ausgestaltet, dass der Prüfkopf in mindestens einer Translationsrichtung kontinuierlich bewegt werden kann. Dabei ist die Führungseinheit so ausgestaltet, dass sich gleichzeitig kontinuierlich der Einschallwinkel, auch Schielwinkel genannt, des Prüfkopfes in Bezug auf die Oberfläche des Bauteils verändert. Die Führungseinheit ist so ausgestaltet, dass sich während der kontinuierlichen Bewegung in mindestens einer Translationsrichtung gleichzeitig kontinuierlich der Schielwinkel des Prüfkopfes entsprechend des Lotes seines Schallbündels auf die zu prüfende Oberfläche des Bauteils verändert.

Unter dem Einschall- oder Schielwinkel in Bezug auf eine Oberfläche wird im Zusammenhang mit der vorliegenden Erfindung der Winkel zwischen der Flächennormale der Oberfläche und der Ausbreitungsrichtung des Schallbündels verstanden.

Die Führungseinheit ist so ausgestaltet, dass der Prüfkopf in Translationsrichtung entlang der Oberfläche des Bauteils kontinuierlich bewegt werden kann. Die Führungseinheit umfasst : eine obere und eine untere Führungsschiene, an welchen der Prüfkopf kontinuierlich entlang bewegt werden kann. : Die Vorrichtung umfasst einen Führungsschlitten, an welchem der Prüfkopf befestigt ist. Die Führungseinheit ; ist so ausgestaltet, dass der Prüfkopf mit Hilfe des Führungsschlittens an der Führungsschiene entlang geführt werden kann.

Beispielsweise kann die Führungseinheit einen Käfig umfassen, innerhalb welchem der Prüfkopf und/oder der Führungsschlitten bewegt werden können/kann.

Mit Hilfe der erfindungsgemäßen Vorrichtung ist für jede Prüfkopfposition in Bezug auf die Führungseinheit ein bestimmter Schielwinkel vorgegeben. Damit lässt sich sowohl die Prüfkopfposition als auch der jeweilige Schielwinkel des Ultraschallprüfkopfes wegabhängig entlang einer Bahn geführt verstellen. Dadurch wird die Prüfung komplexer Bauteile, insbesondere komplexer Bauteile von Gas- oder Dampfturbinen, wie beispielsweise Dampfturbinenschaufeln, deutlich einfacher und erheblich schneller als es bislang möglich war.

Die Führungseinheit umfasst ein erstes Führungselement und ein zweites Führungselement. Mit dem ersten Führungselement kann die Position des Prüfkopfes festgelegt werden. Mit dem zweiten Führungselement kann der Schielwinkel des Prüfkopfes festgelegt werden.

Die Führungseinheit umfasst mindestens eine gekrümmte bzw. gewölbte Führungsschiene und mindestens ein gekrümmtes Führungselement. Das gekrümmte Führungselement oder die gekrümmte Führungsschiene kann beispielsweise konvex in Bezug auf die Prüfoberfläche ausgestaltet sein.

Die zuvor beschriebene erfindungsgemäße Vorrichtung wird erfindungsgemäß zur Ultraschallmessung an einer Turbinenkomponente verwendet. Eine solche erfindungsgemäße Verwendung kann sich beispielsweise dadurch auszeichnen, dass es sich bei der Turbinenkomponente um eine Dampfturbinenkomponente, beispielsweise eine Dampfturbinenschaufel oder einen Dampfturbinenschaufelfuß, handelt.

Im Rahmen des erfindungsgemäßen Verfahrens zur Ultraschallprüfung eines Bauteils wird ein Ultraschallprüfkopf in mindestens einer Translationsrichtung kontinuierlich bewegt. Gleichzeitig wird der Einschallwinkel oder Schielwinkel des Prüfkopfes in Bezug auf die Oberfläche des Bauteils kontinuierlich verändert. Vorteilhafterweise kann der Ultraschallprüfkopf in der Translationsrichtung entlang der Oberfläche des Bauteils bewegt werden.

Erfindungsgemäß wird während der kontinuierlichen Bewegung in Translationsrichtung gleichzeitig kontinuierlich der Schielwinkel des Prüfkopfes entsprechend des Lotes seines Schallbündels auf die zu prüfende Oberfläche des Bauteils verändert werden.

Der Schielwinkel wird dadurch verändert, dass der Prüfkopf um eine Achse senkrecht zur Translationsrichtung gedreht wird. Grundsätzlich kann der Prüfkopf mit Hilfe eines Führungsschlittens auf mindestens einer Führungsschiene entlang geführt werden. Dazu ist kann der Prüfkopf an dem Führungsschlitten befestigt.

Die erfindungsgemäße Verwendung und das erfindungsgemäße Verfahren haben grundsätzlich dieselben Vorteile wie die erfindungsgemäße Vorrichtung zur Ultraschallprüfung.

Weitere Vorteile, Merkmale und Eigenschaften der vorliegenden Erfindung werden im Folgenden anhand eines Ausführungsbeispiels unter Bezugnahme auf die beigefügten Figuren näher beschrieben.
- Figur 1: zeigt schematisch einen Teil einer Dampfturbinen-schaufel mit einer Vorrichtung zur Ultraschallprü-fung gemäß dem Stand der Technik in perspektivi-scher Ansicht.
- Figur 2: zeigt schematisch einen Teil einer Dampfturbinen-schaufel mit einer erfindungsgemäßen Vorrichtung zur Ultraschallprüfung in perspektivischer Ansicht.

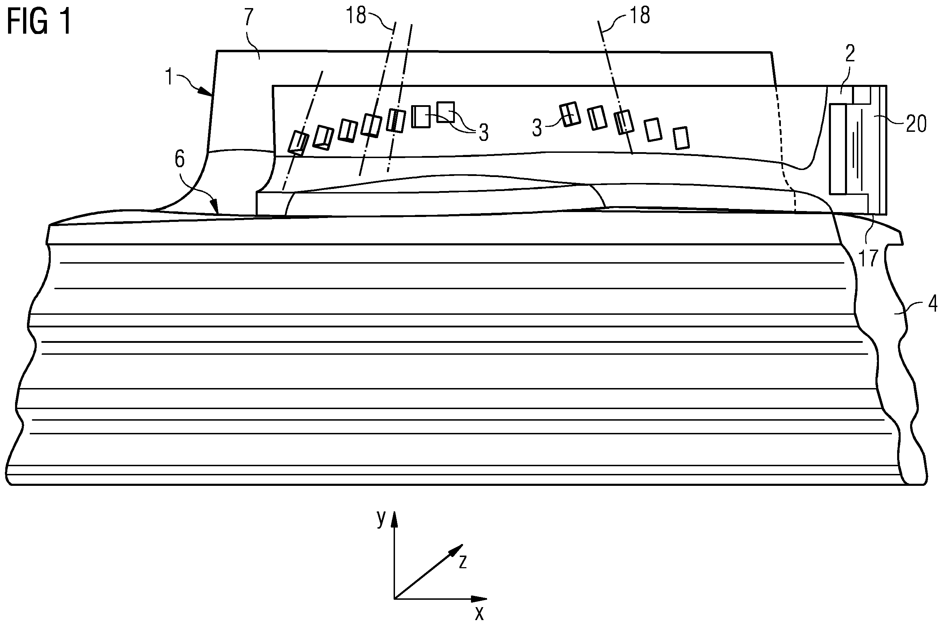

Die Figur 1 zeigt schematisch einen Teil einer Dampfturbinenschaufel 1. Die Dampfturbinenschaufel 1 umfasst ein Schaufelblatt 7 und einen Schaufelfuß 4. Das Schaufelblatt 7 schließt sich an den Schaufelfuß 4 an. Die in der Figur 1 zu überprüfende Oberfläche der Turbinenschaufel 1 ist mit der Bezugsziffer 6 gekennzeichnet.

Eine Vorrichtung zur Ultraschallprüfung 2 ist mit ihrer Unterseite 17 auf das Bauteil aufgelegt. Die Vorrichtung zur Ultraschallprüfung 2 umfasst eine Anzahl an Aussparungen 3, in welche jeweils ein Ultraschallprüfkopf eingesetzt werden kann. Die Aussparungen 3 unterscheiden sich dabei hinsichtlich ihrer Position in x-Richtung. Weiterhin umfasst jede Aussparung 3 eine Längsachse 18, die in der Figur 1 lediglich beispielhaft für einige Aussparungen 3 eingezeichnet ist. Die Aussparungen 3 unterscheiden sich neben ihrer Position in x-Richtung auch hinsichtlich der Ausrichtung ihrer jeweiligen Längsachse 18 in Bezug auf die zu überprüfende Oberfläche 6 beziehungsweise in Bezug auf die Unterseite 17 der Vorrichtung 2. Die Längsachse 18 der jeweiligen Aussparung 3 bestimmt den Schielwinkel des jeweils in die Aussparung eingesetzten Ultraschallprüfkopfes.

Mit Hilfe der in der Figur 1 gezeigten Vorrichtung zur Ultrationen im Hinblick auf die Einschallposition in x-Richtung und den Einschall- oder Schielwinkel realisieren.

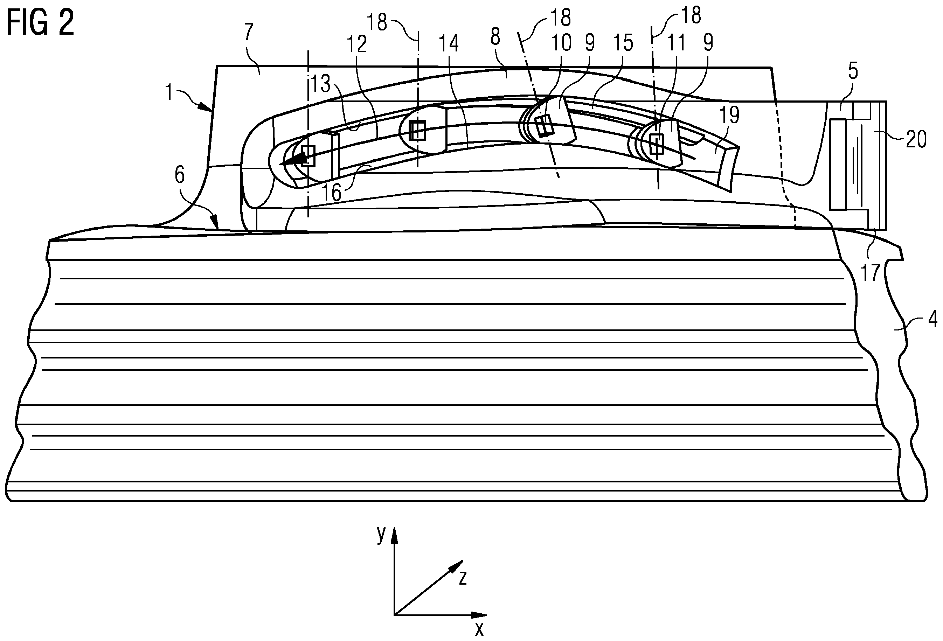

Die Figur 2 zeigt schematisch in teilweise perspektivischer Hinsicht einen Teil einer Dampfturbinenschaufel 1 mit einer erfindungsgemäßen Vorrichtung zur Ultraschallprüfung 5. Die erfindungsgemäße Vorrichtung zur Ultraschallprüfung 5 umfasst eine Unterseite 17, die auf eine zu prüfende Oberfläche 6 einer Dampfturbinenschaufel 1 aufgelegt ist.

Die erfindungsgemäße Vorrichtung zur Ultraschallprüfung 5 umfasst eine Führungseinheit 8 und einen Führungsgriff 20. Mit Hilfe des Führungsgriffes 20 kann das Formstück positioniert werden.

Die Führungseinheit 8 umfasst eine Öffnung 19. Die Öffnung 19 wird begrenzt durch eine obere Führungsschiene 13 und eine untere Führungsschiene 14. Die obere Führungsschiene 13 umfasst ein Führungselement 15. Die untere Führungsschiene 14 umfasst ein Führungselement 16. Innerhalb der Öffnung 19 ist ein Führungsschlitten 9 angeordnet. Der Führungsschlitten 9 ist so ausgestaltet, dass er innerhalb der Öffnung 19 entlang der Führungsschienen 13 und 14 bewegt werden kann. Die Bewegungsrichtung oder Translationsrichtung ist in der Figur 2 durch die Bezugsziffer 12 gekennzeichnet.

In der Figur 2 sind die Führungsschienen 13 und 14 beziehungsweise die Öffnung 19 in Bezug auf die Unterseite 17 gewölbt ausgestaltet, insbesondere in Bezug auf die zu prüfende Oberfläche beziehungsweise die Prüfoberfläche 6 konvex nach außen gewölbt ausgestaltet. Diese Ausgestaltung bewirkt, dass der Führungsschlitten 9 in Bezug auf das in der Figur 2 angegebene Koordinatensystem bei einer Bewegung in x-Richtung zugleich auch in y-Richtung bewegt wird.

Der Führungsschlitten 9 umfasst eine Aussparung 10 für einen Ultraschallprüfkopf 11. In die Aussparung 10 kann ein Ultraschallprüfkopf 11 eingesetzt werden. Die Aussparung 10 umfasst eine Achse 18, die mit einer definierten Ausrichtung des Prüfkopfes 11 korrespondiert. Die Position des Ultraschallprüfkopfes 11 und damit die Prüfkopfposition und der Schielwinkel des Ultraschallprüfkopfes 11 in Bezug auf die Prüfoberfläche 6 wird somit durch die Lage des Führungsschlittens 9 in Bezug auf die Prüfoberfläche 6 festgelegt.

Das Führungselement 15 der oberen Führungsschiene 13 und das Führungselement 16 der unteren Führungsschiene 14 sind angepasst an die jeweilige Prüfoberfläche 6 so ausgestaltet, dass der Führungsschlitten 9 im Verlauf der Translationsbewegung 12 zumindest teilweise um eine Achse senkrecht zur jeweiligen Translationsrichtung 12 rotiert. In der Figur 2 rotiert der Führungsschlitten 9 während der Bewegung in x-Richtung beziehungsweise y-Richtung um die z-Achse. Dabei variiert gleichzeitig die Richtung der Längsachse 18 und damit der Einschallwinkel oder Schielwinkel in Bezug auf die Prüfoberfläche 6.

In der Figur 2 ist der Führungsschlitten 9 als Käfig ausgestaltet, in welchem sich der Prüfkopf 11 befindet. Der Führungsschlitten 9 oder Käfig wird über zwei unabhängige, entlang der Prüfoberfläche 6 dreidimensional verformte Bahnen 13 und 14 geführt. Die untere Führungsschiene oder Bahn 14 definiert dabei die Position des Prüfkopfes 11 auf der Oberfläche 6. Die obere Bahn oder Führungsschiene 13 ist etwas größer ausgespart und definiert durch einen Lageunterschied zur ersten Bahn oder ersten Führungsschiene 14 den Schielwinkel des Prüfkopfes 11. Die Führungselemente 15 und 16 greifen in korrespondierende Aussparungen an dem Führungsschlitten 9 oder Käfig ein und realisieren den jeweiligen Schielwinkel. Das Führungselement 15 läuft dem Führungselement 16 in Bewegungsrichtung 12 nach und kann daher den gesamten Führungsschlitten 9 oder Käfig verdrehen (schielen).

Mit Hilfe der vorliegenden Erfindung ist es möglich, durch richtige Anordnung zweier dreidimensional angeordneter Bahnen oder Führungsschienen 13 und 14 sowohl die Prüfkopfposition als auch den Schielwinkel eines Ultraschallprüfkopfes 11 wegabhängig entlang einer Bahn geführt zu verstellen. Dadurch wird die Prüfung komplexer Bauteile wie beispielsweise die Prüfung von Dampfturbinenschaufelfüßen, deutlich einfacher, empfindlicher und erheblich schneller als es bislang möglich war.

## Patentansprüche

1. Vorrichtung zur Ultraschallprüfung (5) eines Bauteils (1) mit einer Oberfläche (6), die eine auf die Oberfläche (6) auflegbare Unterseite (17), mindestens einen Ultraschallprüfkopf (11), einen Führungsschlitten (9), an welchem der Prüfkopf (11) befestigt ist, und eine Führungseinheit (8) umfasst, wobei:
- die Führungseinheit (8) eine Öffnung (19) umfasst, die durch eine obere Führungsschiene (13) mit einem ersten Führungselement (15) und eine untere Führungsschiene (14) mit einem zweiten Führungselement (16) begrenzt wird;
- der Führungsschlitten (9) innerhalb der Öffnung (19) so angeordnet und ausgestaltet ist, dass er entlang der Führungsschienen (13, 14) in einer Translationsrichtung (12) kontinuierlich bewegt werden kann;
- die Führungsschienen (13, 14) in Bezug auf die Unterseite (17) gewölbt ausgestaltet sind und die Führungselemente (15, 16) gekrümmt ausgestaltet sind, wobei das erste Führungselement (15) dem zweiten Führungselement (16) in Translationsrichtung des Führungsschlittens nachläuft;
- die Führungselemente (15, 16) in korrespondierende Aussparungen an dem Führungsschlitten (9) eingreifen und den jeweiligen Schielwinkel des Prüfkopfes (11) in Bezug auf die Unterseite (17) und die Oberfläche (6) realisieren, indem der Führungsschlitten (9) im Verlauf der Translationsbewegung um eine Achse senkrecht zur Translationsrichtung (12) rotiert; und
- eine Führungsschiene (13) größer ausgespart ist als die andere (14), und durch einen Lageunterschied zu der anderen Führungsschiene (14) den Schielwinkel des Prüfkopfes (11) definiert, wobei sich der Schielwinkel des Prüfkopfes (11) gleichzeitig zur Translationsbewegung des Prüfkopfes (11) kontinuierlich verändert.

2. Vorrichtung zur Ultraschallprüfung (5) nach Anspruch 1,
**dadurch gekennzeichnet, dass**
die Führungseinheit (8) einen Käfig umfasst, innerhalb welchen der Prüfkopf (11) und/oder der Führungsschlitten (9) bewegt werden können/kann.

3. Verwendung einer Vorrichtung zur Ultraschallprüfung (5) nach einem der Ansprüche 1 oder 2 zur Ultraschallmessung an einer Turbinenkomponente (1).

4. Verwendung einer Vorrichtung zur Ultraschallprüfung (5) nach Anspruch 3,
**dadurch gekennzeichnet, dass**
es sich bei der Turbinenkomponente (1) um eine Dampfturbinenkomponente handelt.

5. Verwendung einer Vorrichtung zur Ultraschallprüfung (5) nach Anspruch 4,
**dadurch gekennzeichnet, dass**
es sich bei der Turbinenkomponente (1) um eine Dampfturbinenschaufel handelt.

6. Verfahren zur Ultraschallprüfung eines Bauteils (1) mit einer Oberfläche (6) mittels einer Vorrichtung nach einem der Ansprüche 1 oder 2,
**dadurch gekennzeichnet, dass**
der Ultraschallprüfkopf (11) in mindestens einer Translationsrichtung (12) kontinuierlich bewegt wird und gleichzeitig der Schielwinkel des Prüfkopfes (11) in Bezug auf die Oberfläche (6) des Bauteils (1) kontinuierlich verändert wird, wobei für jede Prüfkopfposition in Bezug auf die Führungseinheit ein bestimmter Schielwinkel vorgegeben ist.

## Claims

1. Apparatus for ultrasonic testing (5) of a component (1) with a surface (6), which comprises an underside (17) that can be placed onto the surface (6), at least one ultrasonic test head (11), a guide slide (9) to which the test head (11) is fastened, and a guide unit (8), wherein:
- the guide unit (8) comprises an opening (19) which is bounded by an upper guide rail (13) having a first guide element (15) and a lower guide rail (14) having a second guide element (16);
- the guide slide (9) is arranged inside the opening (19) and is configured such that it can be moved continuously in a translation direction (12) along the guide rails (13, 14);
- the guide rails (13, 14) are arched with respect to the underside (17) and the guide elements (15, 16) are curved, wherein the first guide element (15) trails the second guide element (16) in the translation direction of the guide slide;
- the guide elements (15, 16) engage in corresponding recesses on the guide slide (9) and achieve the respective squint angle of the test head (11) with respect to the underside (17) and the surface (6) by virtue of the guide slide (9) rotating about an axis perpendicular to the translation direction (12) over the course of the translational movement; and
- one guide rail (13) is recessed to a greater extent than the other (14) and defines the squint angle of the test head (11) by virtue of a position difference with respect to the other guide rail (14), wherein the squint angle of the test head (11) is varied continuously at the same time as the translational movement of the test head (11).

2. Apparatus for ultrasonic testing (5) according to Claim 1,
**characterized in that**
the guide unit (8) comprises a cage inside which the test head (11) and/or the guide slide (9) can be moved.

3. Use of an apparatus for ultrasonic testing (5) according to either of Claims 1 and 2, for ultrasonic measurement on a turbine component (1).

4. Use of an apparatus for ultrasonic testing (5) according to Claim 3,
**characterized in that**
the turbine component (1) is a steam turbine component.

5. Use of an apparatus for ultrasonic testing (5) according to Claim 4,
**characterized in that**
the turbine component (1) is a steam turbine blade.

6. Method for ultrasonic testing of a component (1) with a surface (6) by means of an apparatus according to either of Claims 1 and 2,
**characterized in that**
the ultrasonic test head (11) is moved continuously in at least one translation direction (12) and, simultaneously, the squint angle of the test head (11) is varied continuously with reference to the surface (6) of the component (1), wherein a particular squint angle is predefined for each test head position with respect to the guide unit.

## Revendications

1. Système de contrôle (5) d'une pièce (1) par ultrasons ayant une surface (6), qui comprend un côté (17) inférieur pouvant être mis sur la surface (6), au moins une tête (11) de contrôle par ultrasons, un chariot (9) de guidage, sur lequel la tête (11) de contrôle est fixée et une unité (8) de guidage, dans lequel :
- l'unité (8) de guidage comprend une ouverture (19), qui est délimitée par un rail (13) supérieur de guidage ayant un premier élément (15) de guidage et par un rail (14) inférieur de guidage ayant un deuxième élément (16) de guidage ;
- le chariot (9) de guidage est disposé et conformé à l'intérieur de l'ouverture (19), de manière à pouvoir être déplacé continuellement dans un sens (12) de translation sur les rails (13, 14) de guidage ;
- les rails (13, 14) de guidage sont cintrées par rapport au côté (17) inférieur et les éléments (15, 16) de guidage sont incurvés, le premier élément (15) de guidage suivant le deuxième élément (16) de guidage dans le sens de translation du chariot de guidage ;
- les éléments (15, 16) de guidage pénètrent dans des évidements correspondants du chariot (9) de guidage et réalisent l'angle de déport respectif de la tête (11) de contrôle avec le côté (17) inférieur et la surface (6), par le fait que le chariot (9) de guidage, au cours du déplacement en translation, tourne autour d'un axe perpendiculaire au sens (12) de translation ; et
- un rail (13) de guidage est plus évidé que l'autre (14) et, par une différence de position par rapport à l'autre rail (14) de guidage, définit l'angle de déport de la tête (11) de contrôle, l'angle de déport de la tête (11) de contrôle étant modifié continuellement en même temps que le déplacement en translation de la tête (11) de contrôle.

2. Système de contrôle (5) par ultrasons suivant la revendication 1, **caractérisé en ce que**
l'unité (8) de guidage comprend une cage, dans laquelle la tête (11) de contrôle et/ou le chariot (9) de guidage peuvent/peut être déplacé.

3. Utilisation d'un système de contrôle (5) par ultrasons suivant l'une des revendications 1 ou 2, pour la mesure par ultrasons d'un élément (1) de turbine.

4. Utilisation d'un système de contrôle (5) par ultrasons suivant la revendication 3,
**caractérisée en ce que**
l'élément (1) de turbine est un élément de turbine à vapeur.

5. Utilisation d'un système de contrôle (5) par ultrasons suivant la revendication 4,
**caractérisée en ce que** l'élément (1) de turbine est une aube de turbine à vapeur.

6. Procédé de contrôle par ultrasons d'une pièce (1) ayant une surface (6) au moyen d'un système suivant l'une des revendications 1 ou 2,
**caractérisé en ce que**
l'on déplace continuellement la tête (11) de contrôle par ultrasons dans au moins un sens (12) de translation et on modifie continuellement en même temps l'angle de déport de la tête (11) de contrôle par rapport à la surface (6) de la pièce (1), un angle de déport déterminé étant prescrit pour chaque position de la tête de contrôle par rapport à l'unité de guidage.
